Europäisches Patentamt

European Patent Office

Office européen des brevets

(19)

(11) Veröffentlichungsnummer: **0 511 223 B1**

(12) # EUROPÄISCHE PATENTSCHRIFT

(45) Veröffentlichungstag der Patentschrift: **15.02.95**

(51) Int. Cl.[6]: **C09D 151/08**

(21) Anmeldenummer: **91900782.3**

(22) Anmeldetag: **19.12.90**

(86) Internationale Anmeldenummer:
**PCT/EP90/02245**

(87) Internationale Veröffentlichungsnummer:
**WO 91/10712 (25.07.91 91/17)**

(54) **BESCHICHTUNGSMASSE, VERFAHREN ZU IHRER HERSTELLUNG SOWIE DEREN VERWENDUNG.**

(30) Priorität: **18.01.90 DE 4001251**

(43) Veröffentlichungstag der Anmeldung:
**04.11.92 Patentblatt 92/45**

(45) Bekanntmachung des Hinweises auf die
Patenterteilung:
**15.02.95 Patentblatt 95/07**

(84) Benannte Vertragsstaaten:
**AT BE CH DE DK ES FR GB IT LI NL SE**

(56) Entgegenhaltungen:
**WO-A-88/01287**

(73) Patentinhaber: **BASF Lacke + Farben AG**
**Glasuritstrasse 1**
**D-48165 Münster-Hiltrup (DE)**

(72) Erfinder: **FIGGE, Hans-Jürgen**
**Kleibusch 19**
**D-4400 Münster (DE)**
Erfinder: **DARTMANN, Holger**
**Dionysiusstrasse 29**
**D-4409 Havixbeck (DE)**

(74) Vertreter: **Münch, Volker, Dr.**
**BASF Lacke + Farben AG**
**Patente/Lizenzen/Dokumentation**
**Postfach 61 23**
**D-48136 Münster (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand der vorliegenden Erfindung ist eine Beschichtungsmasse, enthaltend eine Bindemittellösung (I), die

a) 30 bis 70 Gew.-% eines Bindemittels a mit einer Säurezahl von 20 bis 150 mg KOH/g,

b) 2 bis 30 Gern.-%, bevorzugt 5 bis 16 Gew.-%, mindestens eines Phenoplast- und/oder Aminoplastharzes und/oder eines Isocyanatvernetzers als Vernetzungsmittel b,

c) ggf. 1 bis 7 Gew.-%, ggf. bevorzugt 1 bis 5 Gew.-%, Ammoniak und/oder Amin als Neutralisationsmittel und

d) 5 bis 60 Gew.-% organische Lösungsmittel

enthält, wobei die Summe der Gewichtsanteile der Komponenten a bis d jeweils 100 Gew.% beträgt und wobei das Bindemittel a hergestellt worden ist, indem

I. bei Temperaturen von 80 bis 200 °C, vorzugsweise 120 bis 180 °C, unter Verwendung von Katalysatoren

A) 20 bis 80 Gew.-% eines Epoxidharzes mit im Mittel mehr als einer Epoxidgruppe pro Molekül mit

B) 1 bis 60 Gew.-% eines carboxylgruppenhaltigen Polyesterharzes mit einem zahlenmittleren Molekulargewicht von 500 bis 5000

umgesetzt worden sind und

II. in Gegenwart des im ersten Verfahrensschritt erhaltenen Reaktionsproduktes

C) 10 bis 50 Gew.-% ethylenisch ungesättigte Monomere, wobei 10 bis 50 Gew.-% der Monomeren Carboxylgruppen enthalten,

bei Temperaturen von 60 bis 200 °C, bevorzugt 120 bis 140 °C, unter Verwendung von mindestens 2 Gew.-%, bezogen auf das Gewicht der ethylenisch ungesättigten Monomeren C, peroxidischer Initiatoren polymerisiert worden sind, wobei die Summe der Gewichtsanteile der Komponenten A bis C jeweils 100 Gew.% beträgt.

Die Erfindung betrifft außerdem Verfahren zur Herstellung dieser Beschichtungsmassen und ihre Verwendung, insbesondere zur Außenlackierung von tiefgezogenen Dosen.

Verpackungsbehälter, wie beispielsweise Dosen, Tuben, Kanister, Eimer u.dgl., die oft auch als Emballagen bezeichnet werden, weisen im allgemeinen auf ihren Außenseiten eine Lackierung auf, die in erster Linie der dekorativen Gestaltung und des Korrosionsschutzes der Emballagen dient. Aus diesem Grunde sind die problemlose Verarbeitung und das Ausbilden einwandfreier Oberflächen als Grundanforderung an geeignete Beschichtungsmassen zu nennen. Die einwandfreie Dekoration muß jedoch den zum Teil extremen Beanspruchungen bei der Herstellung und dem Gebrauch der Emballagen (Falzen, Bördeln, Verformungen, Sterilisation usw.) standhalten.

Die Außenlackierung von Emballagen besteht in der Regel aus einem mehrschichtigen Aufbau aus einem Grundlack als Dekorationsträger, einer Druckfarbenbeschichtung und ggf. einem farblosen Schutzlack, dem sog. "Silberlack". Besonders hohe Anforderungen werden an Grundlacke gestellt, die nicht mit einer farblosen Schutzlackierung als äußerem Abschluß versehen werden. Diese Grundlacke sind auch unter dem Namen "Non-Varnish-Außenlack" bekannt.

"Non-Varnish-Außenlacke" müssen eine besonders gute Verträglichkeit zur nachfolgenden Bedruckung aufweisen, d.h. sie müssen gut bedruckbar sein, gute Haftvermittlung und einen guten Einschwitzeffekt zeigen. Die resultierenden Beschichtungen müssen hochglänzend sein, d.h. einen Glanzgrad (60° Reflexionswinkel) >80 aufweisen, eine hohe Abriebbeständigkeit sowie eine glatte Oberflächenstruktur besitzen, d.h. z.B. keine Krater o.dgl. zeigen.

Derartige "Non-Varnish-Außenlacke" sind bekannt (vgl. z.B. Ullmanns Encyklopädie der technischen Chemie, 4. Auflage, 1978, Band 15, Seiten 713-714). Basisrohstoffe für diese Lacke sind modifizierte Alkydharze, Epoxidharze, Epoxidharzester, Polyester- und Polyacrylatharze sowie üblicherweise Amino- oder Phenolformaldehydharze oder Isocyanate als Vernetzerkomponenten.

Mit zunehmender Produktionsgeschwindigkeit der Lackieranlagen für Zweiteilige Getränkedosen u.ä. und der hohen Beanspruchung des aufgebrachten Überzugsmittels beim sogenannten "Spin-Necking-Verfahren", bei dem die Dosen im oberen Bereich sehr stark verformt werden, treten große Probleme bei den bekannten Dosenaußenlacken auf. So muß auch bei der extrem starken Verformung während des "Spin-Necking-Verfahrens" gewährleistet sein, daß keine Beschädigung der Lackschicht auftritt. Diese Forderung kann nur durch Beschichtungsmassen erfüllt werden, die zu flexiblen Lackfilmen führen. Andererseits muß aber weiterhin gewährleistet sein, daß die resultierenden Beschichtungen den extremen mechanischen Beanspruchungen bei der Dosenherstellung und auch Füllung der Dosen standhalten. Das bedeutet, daß die resultierenden Lackfilme eine hohe Abriebfestigkeit und entsprechend hohe Härte, insbesondere Ritzhärte, aufweisen müssen. Die Anforderung einer guten Elastizität bei gleichzeitig guter

EP 0 511 223 B1

Härte erfüllen zwar isocyanatvernetzte Systeme, jedoch weisen diese Systeme den Nachteil einer deutlichen Vergilbungsneigung im Falle der pigmentierten Weißlacke auf.

Ein weiterer Nachteil der bekannten Überzugsmittel besteht darin, daS es sich um konventionelle, d.h. organisch gelöste, Systeme handelt. Aufgrund der vorgegebenen Applikationsviskositäten enthalten diese Überzugsmittel Zumeist zwischen 30 und 50 Gew.-% organisches Lösungsmittel, was starke Belastungen der Umgebung durch Lösungsmittelemission beim Einbrennen der Überzüge zur Folge hat. Die Bemühungen gehen daher verstärkt zur Bereitstellung wäßriger Systeme.

Aus der US-PS 4,247,439 und den europäischen Patentschriften Nr. 6334 und 6336 sind hydrolysestabile wäßrige Lacke, insbesondere für die Doseninnenlackierung, bekannt, die aus Veresterungsprodukten von Epoxidharzen mit Carboxyl-funktionellen Polyacrylatharzen erhalten werden. Hydrolysestabile wäßrige Doseninnenschutzlacke sind außerdem bekannt aus US-PS 4,212,781 sowie US-PS-4,308,185.

Die US-PS 4,212,781 offenbart in wäßrigem, basischem Medium dispergierbare Harzmischungen, die erhalten werden durch Copolymerisation von zum Teil Carboxylgruppen enthaltenden ethylenisch ungesättigten Monomeren in Gegenwart eines aliphatischen oder aromatischen 1,2-Diepoxidharzes unter Verwendung von mindestens 3 Gew.-%, bezogen auf das Monomerengewicht, Benzoylperoxid oder äquivalenter Initiatoren. Die aus der US-PS 4,212,781 bekannten Harzmischungen können mit Aminoplastharzen vernetzt werden. Sie eignen sich insbesondere zur Spritzlackierung von Getränkedosen.

Aus der DE-OS 34 46 178 sind wasserverdünnbare Zusammensetzungen zur Beschichtung von Metalldosen bekannt, wobei das in der Zusammensetzung vorliegende Polymer aus einem Reaktionsprodukt von Acrylmonomeren, eines hochmolekularen Epoxidharzes, eines Phenolformaldehydharzes und eines radikalischen Initiators besteht.

Die aus dem Stand der Technik bekannten wäßrigen Systeme für die Außenlackierung von zweiteiligen Getränkedosen werden hauptsächlich auf Aluminiumsubstraten eingesetzt. Sie haben den Nachteil, daß sie auf problematischen Untergründen, wie z.B. abgestreckttiefgezogenen Getränkedosen aus Weißblech, einen unzureichenden Oberflächenschutz bieten.

Aus der internationalen Patentanmeldung mit der internationalen Veröffentlichungsnummer WO 88/01287 sind schließlich Überzugsmittel gemäß Oberbegriff des Anspruchs 1 bekannt. Die dort beschriebenen Überzugsmittel werden hauptsächlich für die Doseninnenlackierung eingesetzt und mittels Elektrotauchlackierung oder mittels Spritzapplikation aufgebracht. Gemäß vorliegender Erfindung sollten die Pasteurisationsbeständigkeit sowie die Elastizität der resultierenden Beschichtung gegenüber diesen Systemen der WO 88/01287 weiter verbessert werden.

Der vorliegenden Erfindung liegt somit die Aufgabe zugrunde, eine Beschichtungsmasse zur Verfügung zu stellen, die für die Außenbeschichtung von Emballagen, insbesondere tiefgezogenen Getränkedosen, geeignet ist und die sowohl konventionell als auch in Form wäßriger Bindemittel-Dispersionen einsetzbar sein sollte. Die aus diesen Beschichtungsmassen hergestellten Überzüge sollten bei guter Härte eine hohe Elastizität aufweisen, um den mechanischen Beanspruchungen bei der Dosenherstellung und der Füllung der Dosen standzuhalten. Weiterhin sollten die Überzüge eine glatte Oberflächenstruktur, einen hohen Glanzgrad und eine gute Bedruckbarkeit sowie vor allem eine gute Haftung des Überzugs auf den verschiedenen Dosenmaterialien wie z.B. Weißblech, Schwarzblech und oberflächenbehandeltem Stahl aufweisen. Die in Rede stehenden Beschichtungsmassen sollten außerdem mit den üblichen Anlagen applizierbar sein.

Im Falle der wäßrigen Beschichtungsmassen sollten die Bindemittel-Dispersionen eine gute Lagerstabilität zeigen. Weiterhin sollten derartige wäßrige Beschichtungsmassen zumindest das Eigenschaftsniveau bekannter konventioneller Außenlacke hinsichtlich Härte, Elastizität, Haftung, Pasteurisations- sowie Lösemittelbeständigkeit erreichen.

Diese Aufgabe wird erfindungsgemäß durch Beschichtungsmassen der eingangs genannten Art gelöst, die dadurch gekennzeichnet sind, daß

1) das Epoxidharz A ein zahlenmittleres Molekulargewicht von mindestens 850 aufweist,
2) das Polyesterharz B eine Säurezahl von 2 bis <30 mg KOH/g aufweist und
3) das Epoxidharz A mit dem Polyesterharz B so umgesetzt wird, daß mindestens 50 %, bevorzugt 50 bis <80 % der anfänglich vornandenen Oxiranringe geöffnet werden.

Gegenstand der vorliegenden Erfindung sind außerdem Verfahren zur Herstellung der Beschichtungsmassen sowie die Verwendung der Beschichtungsmassen zur Beschichtung von Emballagen, insbesondere zur Außenbeschichtung von tiefgezogenen Dosen.

Als Komponente A werden bevorzugt Epoxidharze auf Basis von Bisphenol A mit einem zahlenmittleren Molekulargewicht von 850 bis 20.000 eingesetzt. Beispiele für geeignete Epoxidharze sind Glycidylpolyether, die z.B. unter den Warenzeichen Epikote 1001, 1004, 1007, 1008, 1055 und 1009 vertrieben werden. Vorteilhafterweise weisen die Epoxidharze ein zahlenmittleres Molekulargewicht von 1200 bis 3000 auf.

3

Als Komponente B werden Polyester mit einem zahlenmittleren Molekulargewicht von 500 bis 5000, bevorzugt 1000 bis 3000, und mit einer Säurezahl von 2 bis <30 mg KOH/g, bevorzugt 10 bis 20 mg KOH/g, eingesetzt.

Die Herstellung der als Komponente B eingesetzten Polyester erfolgt nach den dem Fachmann bekannten Bedingungen für Polyveresterungsreaktionen. Es handelt sich hierbei um bekannte Polykondensate aus aromatischen und/oder aliphatischen Dicarbonsäuren, aromatischen Dicarbonsäureanhydriden, aromatischen Tricarbonsäureanhydriden, aromatischen Tetracarbonsäureanhydriden und -dianhydriden sowie aliphatischen und cycloaliphatischen Mono-, Di- und Triolen. Bevorzugte Ausgangsverbindungen für die Polyester (Komponente B) sind Terephthalsäure, Isophthalsäure, Dimethylterephthalat, o-Phthalsäure, o-Phthalsäureanhydrid, Trimellitsäure, Trimellitsäureanhydrid, Adipinsäure, Sebazinsäure, aliphatische Monoole mit 4 bis 20 Kohlenstoffatomen, 2,2-Dimethyl-1,3- propandiol, Ethylenglykol, Diethylenglykol, 1,6-Hexandiol, Trimethylolpropan, Glycerin, Pentaerythrit.

Die als Komponente C eingesetzten ethylenisch ungesättigten Monomeren bestehen zu 10 bis 50 Gew.-% aus Carboxylgruppen enthaltenden Monomeren. Als Beispiele für Carboxylgruppen enthaltende Monomere sind Acrylsäure und Methacrylsäure zu nennen. Des weiteren können als Monomere nicht funktionalisierte Monomere, wie beispielsweise Styrol, Vinyltoluol und $\alpha$-Methylstyrol, bevorzugt Styrol, eingesetzt werden.

Als dritte Klasse von Monomeren werden vorzugsweise (Meth)acrylsäureester mit 1 bis 20 Kohlenstoffatomen im Alkoholrest, wobei auch hydroxifunktionelle Monomere eingesetzt werden können, verwendet.

Beispiele hierfür sind Ethylacrylat, Propylacrylat, Isopropylacrylat, Butylacrylat, Isobutylacrylat, t-Butylacrylat, Pentylacrylat, Decylacrylat, Laurylacrylat, Methylmethacrylat, Butylmethacrylat, Isobutylmethacrylat, Hexylmethacrylat, 2-Ethylhexylmethacrylat, Octylmethacrylat, Nonylmethacrylat sowie Hydroxiethylacrylat, Hydroxipropylacrylat, Hydroxibutylacrylat, Hydroxiethylmethacrylat, Hydroxipropylmethacrylat und Hydroxibutylmethacrylat.

Die ethylenisch ungesättigten Monomeren der Komponente C bestehen vorzugsweise aus

x) 10 bis 50 Gew.-%, bevorzugt 20 bis 40 Gew.-%, Carboxylgruppen enthaltenden Monomeren,

y) 0 bis 50 Gew.-%, bevorzugt 20 bis 40 Gew.-%, nicht-funktionalisierten Monomeren und

z) 5 bis 60 Gew.-%, bevorzugt 10 bis 50 Gew-.%, (Meth)acrylsäureestern mit 1 bis 20 Kohlenstoffatomen im Alkoholrest, welche ggf. hydroxifunktionell sind,

wobei die Summe von x, y und z 100 Gew.-% beträgt.

Die Komponente C hat eine Säurezahl im Bereich von 30 bis 150, vorzugsweise im Bereich von 50 bis 100 mg KOH/g.

Vorzugsweise wird das Bindemittel a erhalten aus 20 bis 60 Gew.-% A, 10 bis 40 Gew.-% B und 15 bis 40 Gew.-% C, wobei die Summe der Gewichtsanteile der Komponenten A, B und C 100 Gew.-% beträgt.

Das aus den Komponenten A, B und C hergestellte Bindemittel a weist im allgemeinen eine Säurezahl auf, die hoch genug ist, um stabile wäßrige Dispersionen herzustellen. Bevorzugt liegt die Säurezahl dieses Bindemittels a zwischen 20 und 150 mg KOH/g, besonders bevorzugt zwischen 40 und 100 mg KOH/g.

Zur Initiierung der Polymerisation der Komponenten x, y und z werden mindestens 2 Gew.-%, bevorzugt mindestens 2,6 Gew.-% und besonders bevorzugt mindestens 3 Gew.-%, bezogen auf das Gesamtgewicht der ethylenisch ungesättigten Monomeren, Dibenzoylperoxid oder eines freie Radikale initiierenden Äquivalentes bei der Verwendungstemperatur eingesetzt. Bevorzugt eingesetzt werden Benzoyloxi- und/oder Phenylradikale liefernde Initiatoren.

Beispiele für geeignete Initiatoren sind Dibenzoylperoxid, t-Butylbenzoylperoxid, tert.-Butylperoctoat, Cumolhydroperoxid und Methylethylketonperoxid, Di-tert.-butylperoxid, tert.-Butylperoxi-2-ethylhexanoat, tert.-Butylperoxiisononanoat, tert.-Butylperoxiisobutyrat und tert.-Amylperoxi-2-ethylhexanoat.

Gemäß der vorliegenden Erfindung kann als Komponente b jedes beliebige Phenoplastharz verwendet werden, solange es die für die Reaktivität erforderliche Methylol-Funktionalität aufweist. Bevorzugte Phenolharze sind unter alkalischen Bedingungen hergestellte Reaktionsprodukte von Phenol, substituierten Phenolen und Bisphenol A mit Formaldehyd. Unter derartigen Bedingungen wird die Methylolgruppe entweder ortho- oder para-ständig mit dem aromatischen Ring verknüpft.

Bevorzugt werden Phenoplastharze vom Resoltyp eingesetzt, die auf Bisphenol A basieren und mehr als eine Methylolgruppe je Phenylring enthalten.

Typische Aminoplastharze sind Melamin-, Benzoguanamin-und Harnstoff-Formaldehydharze. Bevorzugt werden diese in mit niederen Alkoholen, meistens Methanol und/oder Butanol, veretherter Form verwendet. Geeignete Aminoplastharze sind beispielsweise unter dem Warenzeichen Cymel, Luwipal, Maprenal und Beetle auf dem Markt erhältlich. Ein geeignetes Aminoplastharz ist beispielsweise Hexamethoximethylmelamin.

Selbstverständlich sind neben den Kondensationsprodukten mit Formaldehyd auch solche mit anderen Aldehyden verwendbar.

Weiterhin als Komponente b geeignet sind Isocyanatvernetzer, die allein oder zusammen mit dem Phenoplast- und/oder Aminoplastharz eingesetzt werden können. Beispiele für derartige Isocyanatvernetzer sind blockierte Isocyanate, bevorzugt vom Typ Hexamethylendiisocyanat oder Touylendiisocyanat, die beispielsweise unter dem Warenzeichen Desmodur auf dem Markt erhältlich sind.

Für den Fall, daß das beschriebene Bindemittel a zur Herstellung eines wäßrigen Überzugsmittels eingesetzt wird, werden als Neutralisationsmittel (Komponente c) noch 1 bis 7 Gew.-%, bevorzugt 1 bis 5 Gew.-%, jeweils bezogen auf das Gesamtgewicht der Bindemittellösung der Komponenten a bis d, Ammoniak und/oder Amine eingesetzt. Als Neutralisationsmittel c bevorzugt sind Triethylamin und/oder Dimethylethanolamin.

Als Komponente d geeignete organische Lösungsmittel sind beispielsweise Monoalkohole mit 3 bis 18 Kohlenstoffatomen, wie z.B. Butanol, iso-Butanol, Propanol und iso-Propanol; Glykolether, wie beispielsweise Butylglykol, Butyldiglykol, Hexylglykol und Propylenglykol. Bevorzugt werden als Lösungsmittel zumindest teilweise solche Lösungsmittel eingesetzt, die zugleich als Cosolvens für die wäßrige Dispersion geeignet sind, z.B. Butanol, Butylglykol und Butyldiglykol. Die Lösungsmittel werden üblicherweise in Mengen von 5 bis 60 Gew.-% eingesetzt.

Außer der beschriebenen Bindemittellösung, die üblicherweise in Mengen von 5 bis 60 Gew.-%, bevorzugt von 15 bis 50 Gew.-%, jeweils bezogen auf das Gesamtgewicht der Beschichtungsmasse, eingesetzt wird, können die Beschichtungsmassen ggf. noch Pigmente und/oder Füllstoffe, weitere Hilfs- und Zusatzstoffe, Lösungsmittel und ggf. Wasser in jeweils üblichen Mengen enthalten.

Pigmente und/oder Füllstoffe werden bevorzugt in Mengen von 25 bis 35 Gew.-%, bezogen auf das Gesamtgewicht der Beschichtungsmasse, eingesetzt. Beispiele für geeignete Pigmente sind Titandioxid, beispielsweise die unter den Handelsnamen Titan Rutil RN 59, RTC 60, R 900 und RDI-S erhältlichen Produkte.

Als Füllstoffe geeignet sind Bariumsulfat, wie z.B. die Handelsprodukte Blancfix micro, Blancfix F; Siliumdioxid, z.B. das Handelsprodukt Quarzmehl SF 600; Kaliumcarbonat und Talkum.

Bevorzugt enthalten die Beschichtungsmassen noch 0,01 bis 5,0 Gew.-%, bezogen auf das Gesamtgewicht der Beschichtungsmasse, weitere Hilfs- und Zusatzstoffe, wie z.B. Gleitmittel wie Wachse, Weichmacher, Stabilisatoren, Netzmittel, Dispergierhilfsmittel, Katalysatoren, oberflächenaktive Zusatzmittel, und zwar einzeln oder im Gemisch.

Der Lösemittelgehalt der erfindungsgemäßen Beschichtungsmassen beträgt im Falle der konventionellen, d.h. lösemittelhaltigen, Beschichtungsmassen bevorzugt 30 bis 50 Gew.-%, bezogen auf das Gesamtgewicht der Beschichtungsmasse. Wäßrige Beschichtungsmassen dagegen enthalten bevorzugt 10 bis 25 Gew.-% organische Lösungsmittel und bevorzugt 20 bis 40 Gew.-% Wasser, jeweils bezogen auf das Gesamtgewicht der Beschichtungsmasse.

Die zuvor beschriebenen erfindungsgemäßen Beschichtungsmassen werden in einem Verfahren hergestellt, bei dem zunächst das Epoxidharz A bei 80 bis 200°C, vorzugsweise bei 120 bis 180°C, unter Verwendung von Katalysatoren mit der Polyesterkomponente B umgesetzt wird, so daß mindestens 50 %, bevorzugt 50 bis < 80 % der anfänglich vorhandenen Oxiranringe geöffnet werden, anschließend in Gegenwart des im ersten Verfahrensschritt erhaltenen Reaktionsproduktes die Komponente C bei 60 bis 200°C, bevorzugt bei 120 bis 140°C, unter Verwendung von mindestens 2 Gew.-%, bezogen auf das Gewicht der ethylenisch ungesättigten Monomeren, peroxidischer, bevorzugt Benzoyloxi- und/oder Phenylradikale liefernder Initiatoren radikalisch polymerisiert wird, ggf. in einem dritten Verfahrensschritt das erhaltene Produkt mit der Komponente c neutralisiert wird, das organische Lösungsmittel d, das Vernetzungsmittel b sowie ggf. weitere übliche Zusatzstoffe zugemischt werden und das Überzugsmittel ggf. in Wasser dispergiert wird.

Die im ersten Verfahrensschritt erfolgende Umsetzung des Epoxidharzes mit den Polyesterharzen wird mit Aminen, vorzugsweise mit tertiären Aminen, katalysiert. Die Umsetzung erfolgt in der Weise, daß mindestens 50 %, bevorzugt 50 bis < 80 % der Oxiranringe in $\beta$-Hydroxiester- bzw. $\beta$-Hydroxiethergruppen überführt werden.

Im zweiten Verfahrensschritt werden die ethylenisch ungesättigten, zum Teil Carboxylgruppen enthaltenden Monomeren der Komponente C in Gegenwart des im ersten Verfahrensschritt erzeugten Epoxi-Polyester-Adduktes einer radikalischen Polymerisationsreaktion unterworfen. Die radikalische Polymerisation wird von mindestens 2 Gew.-%, bezogen auf das Gesamtgewicht der Monomeren, peroxidischer, bevorzugt Benzoyloxi- und/oder Phenylradikale liefernder Initiatoren initiiert. Bevorzugt werden dabei mindestens 2,6 Gew.-%, besonders bevorzugt mindestens 3 Gern.-%, an Initiatoren verwendet. Selbstverständlich werden auch gute Ergebnisse erzielt, wenn hohe Anteile an Initiatoren, z.B. 8 bis 10 Gew.-%, eingesetzt werden, doch ist dies aus wirtschaftlichen Gründen nicht empfehlenswert. Wird in Gegenwart relativ niedriger Initiatorkonzentrationen, z.B. bei weniger als 3 Gew.-%, bezogen auf das Monomergewicht, polymerisiert, ist ein höherer Neutralisationsgrad nötig, um eine stabile Dispersion zu erhalten.

In erster Linie werden peroxidische Initiatoren eingesetzt, die unter Bildung von Benzoyloxi- und/oder Phenylradikalen zerfallen. Selbstverständlich ist es aber möglich, andere Initiatoren zu verwenden, sofern diese zu äquivalenten Bedingungen führen.

Bevorzugt werden Dibenzoylperoxid und/oder tert. Butylperbenzoat als Initiatoren eingesetzt. Als weitere mögliche Initiatoren sind tert. Butylperoctoat, Cumolhydroperoxid, Di-tert.-butylperoxid, tert.-Butylperoxi-2-ethylhexanoat, tert.-Butylperoxiisononanoat, tert.-Butylperoxiisobutyrat, tert.-Amylperoxi-2-ethylhexanoat und Methylethylketonperoxid zu nennen. Vorteilhaterweise wird durch Initiatornachdosierung und/oder durch Verlängerung des Initiatorzulaufs der Anteil an Restmonomeren auf weniger als 0,4 %, bezogen auf die Summe von a bis d, gehalten.

Für den Fall, daß das beschriebene Bindemittel zur Herstellung einer wäßrigen Beschichtungsmasse eingesetzt wird, wird nach der radikalischen Polymerisation zu dem erhaltenen Polymerisat in einem dritten Verfahrensschritt der Vernetzer b zugemischt oder mit dem Bindemittel präkondensiert. Das so erhaltene Bindemittel wird durch Zugabe von Ammoniak und/oder Aminen zumindest teilweise neutralisiert. Der Ammoniak und/oder die Amine werden dabei in einer Menge eingesetzt, die ausreicht, um die Beschichtungsmasse wasserdispergierbar zu machen. Die Menge der Komponente b liegt im allgemeinen bei 1 bis 7 Gew.-%, bevorzugt 1 bis 5 Gew.-%, bezogen auf das Gesamtgewicht der Summe der Komponenten a bis d.

Anschließend werden dem System für die Erzeugung eines gut verlaufenden Films notwendige Cosolventien sowie weitere übliche Hilfs- und Zusatzstoffe und ggf. Pigmente und Füllstoffe zugemischt und die Beschichtungsmasse in Wasser dispergiert.

Die erfindungsgemäßen Beschichtungsmassen härten im Objekttemperaturbereich von 150 bis 400 °C während einer Zeit von 2 s bis 10 min. aus. Sie können durch Walzen, Rakeln, Streichen, Spritzen, Fluten oder Tauchen mittels üblicher Vorrichtungen aufgebracht werden, wobei der Film anschließend zu einem festhaftenden Überzug ausgehärtet wird. Die Beschichtungsmassen werden im Falle der Dosenaußenlacke bevorzugt mittels Walzenauftrag appliziert, im Falle der Doseninnenlacke werden sie bevorzugt mittels Spritzapplikation aufgetragen.

Die erfindungsgemäßen wäßrigen Beschichtungsmassen können auch durch die anodische Elektrotauchlackierung aufgebracht werden. Dabei werden die zu beschichtenden Teile in ein wäßriges Bad auf Basis der erfindungsgemäßen, zuvor beschriebenen Überzugsmittel eingetaucht und als Anode geschaltet. Mittels Gleichstrom wird ein Film auf den Dosen abgeschieden, das Substrat wird aus dem Bad entfernt, und der Film wird durch Einbrennen gehärtet.

Die Beschichtungsmassen werden bevorzugt als Einschichtlackierung mit einer Trockenfilmschichtdicke von im allgemeinen 5 bis 25 μm aufgebracht.

Die erfindungsgemäßen Beschichtungsmassen eignen sich zur Beschichtung von Emballagen, insbesondere zur Außenbeschichtung von Dosen u.dgl. Sie können aber auch zur Innenbeschichtung von Dosen u.dgl. eingesetzt werden. Die Emballagen können dabei aus den unterschiedlichsten Materialien bestehen und unterschiedlichste Geometrien aufweisen. Als Materialien kommen insbesondere Schwarzblech, Weißblech und verschiedene Eisenlegierungen in Frage, die ggf. mit einer Passivierungsschicht auf Basis von Nickel-, Chrom- und Zinkverbindungen versehen sind. Die Emballagen können in Form von beispielsweise Dosenhalbteilen, also Rümpfen und Deckeln, als 3-teilige Dosen und als 2-teilige, abgestreckttiefgezogene oder anderweitig tiefgezogene Dosen, wie z.B. Getränke- und Konservendosen, beschichtet werden.

Vorteile des erfindungsgemäßen Verfahrens bestehen darin, daß es vielfältige Möglichkeiten zur Steuerung der Säurezahl durch Variation des Polyesters oder des Polymerisats gibt. Auf diese Weise können Applikationseigenschaften (z.B. große Toleranz für die Temperaturen bei der Aushärtung) wie auch Haftungseigenschaften für spezifische Metalloberflächen optimiert werden. Durch das Polymerisationsverfahren sind die Verträglichkeit der Komponenten untereinander und die Unbedenklichkeit bezüglich der Restmonomeren gewährleistet (Restmonomerengehalt unter 0,4 % bezogen auf die Summe von a bis d).

Weiterhin zeichnen sich die aus den erfindungsgemäßen Beschichtungsmassen erhaltenen Überzüge durch eine gute Härte bei gleichzeitig guter Flexibilität aus, und die Überzüge zeigen eine glatte Oberflächenstruktur (Porenfreiheit), einen hohen Glanzgrad, eine gute Bedruckbarkeit sowie vor allem eine gute Haftung auf den verschiedenen Dosenmaterialien, insbesondere auch auf oberflächenbehandelten Stahluntergründen.

Die erfindungsgemäßen wäßrigen Beschichtungsmassen zeigen überdies eine gute Lagerstabilität und erreichen zumindest das Eigenschaftsniveau bekannter konventioneller Außenlacke hinsichtlich Härte, Elastizität, Haftung, Pasteurisations- sowie Lösemittelbeständigkeit.

Nachfolgend wird die Erfindung anhand von Ausführungsbeispielen näher erläutert. Alle Angaben über Teile und Prozente stellen dabei Gewichtsangaben dar, sofern nicht ausdrücklich etwas anderes angegeben wird.

1. Herstellung eines Polyesterharzes (Komponente B)

1.1 In einem Vierhalskolben, der mit Rührer, Thermometer und Wasserabscheider ausgestattet ist, werden 674 g Terephthalsäure, 112 g Trimellitsäureanhydrid, 847 g Adipinsäure, 19 g Pentaerythrit, 1215 g Diethylenglykol und 8 g Veresterungskatalysator eingewogen und bei 230°C auf eine Säurezahl von 15 mg KOH/g kondensiert. Die Polyesterschmelze wird schließlich 75%ig in Butylglykol angelöst.

1.2 In einem Vierhalskolben, der mit Rührer, Thermometer und Wasserabscheider ausgestattet ist, werden 572 g Terephthalsäure, 220 g Trimellitsäureanhydrid, 838 g Adipinsäure, 19 g Pentaerythrit, 1202 g Diethylenglykol und 8 g Veresterungskatalysator eingewogen und bei 230°C auf eine Säurezahl von 30 mg KOH/g kondensiert. Die Polyesterschmelze wird anschließend 75%ig in Butylglykol angelöst.

2. Herstellung eines Epoxiesterharzes

2.1 In einem Vierhalskolben, der mit Rührer, Thermometer und Rückflußkühler ausgestattet ist, wird eine Mischung aus 918 g eines Epoxidharzes auf Basis Bisphenol A mit einem Epoxy-Äquivalentgewicht von 3000, 306 g Butylglykol, 2 g N,N-Dimethylbenzylamin und 820 g des Polyesterharzes aus 1.1 auf 160°C erwärmt, bis die Säurezahl unter 2 mg KOH/g gefallen ist. Der so hergestellte Epoxiester besitzt in 30%iger Lösung in Butylglykol eine Viskosität von 140 mPa.s bei 23°C.

2.2 In einem Vierhalskolben, der mit Rührer, Thermometer und Rückflußkühler ausgestattet ist, wird eine Mischung aus 918 g eines Epoxidharzes auf Basis Bisphenol A mit einem Epoxy-Äquivalentgewicht von 3000, 300 g Butylglykol, 2 g N,N-Dimethylbenzylamin und 816 g des Polyesterharzes 1.2 auf 160°C erwärmt, bis die Säurezahl unter 2 mg KOH/g gefallen ist. Der so hergestellte Epoxiester besitzt in 30%iger Lösung in Butylglykol eine Viskosität von 150 mPas bei 23°C.

2.3 In einem Vierhalskolben, der mit Rührer, Thermometer und Rückflußkühler ausgestattet ist, wird eine Mischung aus 772 g eines Epoxidharzes auf Basis Bisphenol A mit einem Epoxy-Äquivalentgewicht von 940, 254 g Butylglykol, 2 g N,N-Dimethylbenzylamin und 1023 g des Polyesterharzes 1.1 auf 160°C erwärmt, bis die Säurezahl unter 2 mg KOH/g gefallen ist. Der so hergestellte Epoxiester besitzt in 30%iger Lösung in Butylglykol eine Viskosität von 50 mPas bei 23°C.

3. Herstellung eines Copolymerisats

3.1 In einem Vierhalskolben mit Rührer, Thermometer, Rückflußkühler und zwei Zulaufgefäßen werden 2045 g des Epoxiesters 2.1 vorgelegt. Dazu gibt man bei 120°C gleichzeitig aus dem ersten Zulaufbehälter eine Mischung aus 169 g Acrylsäure, 166 g Styrol und 327 g Butylacrylat und aus dem zweiten Zulaufbehälter eine Lösung von 25 g Dibenzoylperoxid (75%ig) in 122 g Methylethylketon. Die Monomeren werden während 2 h, der Initiator während 2,5 h zudosiert. Nach Beendigung der Polymerisation wird mit Butylglykol auf einen Festkörper von 50 % eingestellt.

3.2 In einem Vierhalskolben, der mit Rührer, Thermometer, Rückflußkühler und zwei Zulaufgefäßen ausgestattet ist, werden 2036 g des Epoxiesters 2.2 vorgelegt. Dazu gibt man bei 120°C gleichzeitig aus dem ersten Zulaufbehälter eine Mischung aus 163 g Acrylsäure, 166 g Styrol und 327 g Butylacrylat und aus dem zweiten Zulaufbehälter eine Lösung von 25 g Dibenzoylperoxid (75 %ig) in 122 g Methylethylketon. Die Monomeren werden während 2 h, der Initiator während 2,5 h zudosiert. Nach Beendigung der Polymerisation wird mit Butylglykol auf einen Festkörper von 50 % eingestellt.

3.3 In einem Vierhalskolben, der mit Rührer, Thermometer, Rückflußkühler und zwei Zulaufgefäßen ausgestattet ist, werden 2051 g des Epoxiesters 2.3 vorgelegt. Dazu gibt man bei 120°C gleichzeitig aus dem ersten Zulaufbehälter eine Mischung aus 163 g Acrylsäure, 166 g Styrol und 327 g Butylacrylat und aus dem zweiten Zulaufbehälter eine Lösung von 25 g Dibenzoylperoxid (75 %ig) in 122 g Methylethylketon. Die Monomeren werden während 2 h, der Initiator während 2,5 h zudosiert. Nach Beendigung der Polymerisation wird mit Butylglykol auf einen Festkörper von 50 % eingestellt.

4. Herstellung eines Polyesters für Vergleichsbeispiel 2

4.1 In einem Vierhalskolber, der mit Rührer, Thermometer und Füllkörperkolonne ausgestattet ist, werden unter den üblichen Polykondensationsbedingungen 11,7 Teile Hexandiol-1,6, 10,4 Teile Neopentylglykol, 3,4 Teile Trimethylolpropan, 5,7 Teile einer handelsüblichen Dimerfettsäure (Säurezahl um 190 mg KOH/g, Viskosität bei 25°C 8.10$^{-3}$ - 9.10$^{-3}$ m$^2$/s, Dimeranteil ca. 80 %, Trimeranteil ca. 20 %) und 31,6 Teile Isophthalsäure unter Zusatz von 0,04 Teilen Veresterungskatalysator verestert, bis eine SZ < 10 mg KOH/g und eine Viskosität bei 23°C von 90-95 s Auslaufzeit im DIN 4 mm-Becher (50%ig in Ethylglykolacetat) erreicht ist. Das Harz wird anschließend mit Solvesso® 150 und Butylglykol (4 : 1) auf einen Festkörper von 60 % eingestellt.

Beispiel 1

Zur Herstellung eines Überzugsmittels 1 werden zuerst 24 Teile des Copolymerisats 3.1 mit 27 Teilen Titandioxid vom Rutil-Typ angerieben, weitere 5 Teile Copolymerisat 3.1, 7 Teile eines handelsüblichen Benzoguanaminharzes (83%ig in Butanol, Veretherungsalkohol n Butanol, wie z.B. Luwipal® B 017 der BASF AG, Ludwigshafen), 8 Teile eines handelsüblichen epoxidharzmodifizierten Alkydharzes (70%ig in Butylglykol-/Methoxipropanol : 1, Säurezahl 40 - 60 mg KOH/g; Handelsprodukt Resydrol® WE 162 der Hoechst AG) und 0,2 Teile Polytetrafluorethylenwachs (Schmelzpunkt 100°C , z.B. Handelsprodukt Lanco TF 1780 der Firma Langer & Co) zugesetzt und mit 2 Teilen Dimethylethanolamin neutralisiert. Anschließend wird die Mischung in 40 Teile vollentsalztes Wasser eindispergiert und anschließend mit vollentsalztem Wasser auf eine Auslaufzeit von 60 s im DIN 4-mm Auslaufbecher bei 23°C eingestellt.

Eine unlackierte, zweiteilige Getränkedose aus Weißblech (E 2.0/2.0) wird mittels Walzenauftrag mit dem Überzugsmittel 1 beschichtet. Die Beschichtung wird zweimal 20 s bei 190°C sowie einmal 5 min. bei 230°C eingebrannt Es resultiert ein Überzug mit einer Trockenfilmschichtdicke von 11 µm. Die Prüfergebnisse der resultierenden Beschichtung sind in Tabelle 1 dargestellt.

Vergleichsbeispiel 1

Es wird analog Beispiel 1 ein Überzugsmittel V1 hergestellt, indem zuerst 24 Teile des Copolymerisats 3.2 mit 27 Teilen Titandioxid vom Rutiltyp angerieben werden, weitere 5 Teile des Copolymerisats 3.2, 7 Teile eines handelsüblichen Benzoguanaminharzes (83%ig in Butanol, Veretherungsalkohol n-Butanol, wie z.B. Luwipal® B 017 der BASF AG, Ludwigshafen), 8 Teile eines handelsüblichen epoxidharzmodifizierten Alkydharzes (70%ig in Butylglykol/Methoxipropanol 3 : 1, Säurezahl 40 - 60 mg KOH/g, wie z.B. Resydrol® WE 162 der Hoechst AG) und 0,2 Teile Polytetrafluorethylenwachs (Schmelzpunkt 100°C, wie z.B. Lanco TF 1780 der Firma Langer & Co.) zugesetzt und mit 2 Teilen Dimethylethanolamin neutralisiert wird. Anschließend wird die Mischung in 40 Teile vollentsalztes Wasser eindispergiert und anschließend mit vollentsalztem Wasser auf eine Auslaufzeit von 60 s im DIN4-mm-Auslaufbecher bei 23°C eingestellt.

Die Applikation und Aushärtung des Überzugsmittels V1 sowie die Prüfung der resultierenden Beschichtung erfolgt analog Beispiel 1. Die Prüfergebnisse sind ebenfalls in Tabelle 1 dargestellt.

Beispiel 2

Zur Herstellung eines Überzugsmittels 2 werden zuerst 24 Teile des Copolymerisates 3.1 mit 27 Teilen Titandioxid vom Rutil-Typ angerieben, weitere 5 Teile Copolymerisat 3.1, 7 Teile eines handelsüblichen Benzoguanaminharzes (z.B. Luwipal B017 von BASF AG, n-butanolverethert, 83 %ig in Butanol), 8 Teile eines handelsüblichen epoxidharzmodifizierten Alkydharzes (z.B. Resydrol WE 162 von Hoechst AG, 70 %ig in Butylglykol/Methoxipropanol 3 : 1, SZ 40-60 mg KOH/g) und 0,2 Teile Polytetrafluorethylenwachs (z.B. Lanco TF 1780 von Langer & Co., Schmelzpunkt 100°C) zugesetzt.

Anschließend wird die Mischung in 40 Teilen Butyldiglykolacetat angelöst und auf eine Auslaufzeit von 60 s im DIN-4-mm-Auslaufbecher bei 23°C eingestellt.

Die Applikation und Aushärtung des Überzugsmittels 2 sowie die Prüfung der resultierenden Beschichtung erfolgt analog Beispiel 1. Die Prüfergebnisse sind ebenfalls in Tabelle 1 dargestellt.

Beispiel 3

Zur Herstellung eines Überzugsmittels 3 werden zuerst 25 Teile des Copolymerisates 3.3 mit 30 Teilen Titandioxid vom Rutil-Typ angerieben, weitere 15 Teile Copolymerisat 3.3, 1 Teil eines handelsüblichen Harnstoffharzes (z.B. Dynomin UM 15 von Dyno Cyanamid, 96 %ig in Methanol/Wasser), 7 Teile eines handelsüblichen Benzoguanaminharzes (83%ig in Butanol, Veretherungsalkohol n-Butanol, wie z.B. Luwipal® B 017 der BASF AG, Ludwigshafen), 3,5 Teile eines handelsüblichen epoxidharzmodifizierten Alkydharzes (70%ig in Butylglykol/Methoxipropanol 3 : 1, Säurezahl 40 - 60 mg KOH/g, wie z.B. Resydrol® WE 162 der Hoechst AG) und 0,2 Teile Polytetrafluorethylenwachs (Schmelzpunkt 100 °C, wie z.B. Polytetrafluorethylenwachs (Schmelzpunkt 100 °C, wie z.B. Lanco TF 1780 der Firma Langer & Co.) zugesetzt und mit 1,5 Teilen Dimethylethanolamin neutralisiert. Anschließend wird die Mischung in 40 Teile vollentsalztes Wasser eindispergiert und anschließend mit vollentsalztem Wasser auf eine Auslaufzeit vo 60 s im DIN 4-mm-Auslaufbecher bei 23 °C eingestellt.

Die Applikation und Aushärtung des Überzugsmittels 3 sowie die Prüfung der resultierenden Beschichtung erfolgt analog Beispiel 1. Die Prüfergebnisse sind ebenfalls in Tabelle 1 dargestellt.

Vergleichsbeispiel 2

Zum Vergleich wird eine unlackierte, zweiteilige Getränkedose aus Weißblech (E 2,0/2,0 ) mit einem üblicherweise eingesetzten, lösemittelhaltigen Außenlack V2 beschichtet, zu dessen Herstellung 20 Teile eines handelsüblichen acrylierten Polyesters (z.B. Uralac S3152 von DSM, 60%ig in Butylglykol/Solvesso 150 4 : 1, SZ < 50 mg KOH/g) mit 27 Teilen Titandioxid vom Rutil-Typ angerieben werden. Anschließend wird der Lack mit 8 Teilen Butylglykol, weiteren 4 Teilen des handelsüblichen acrylierten Polyesters, 3 Teilen des Polyesterharzes 4.1, 7,5 Teilen eines handelsüblichen epoxidharzmodifizierten Alkydharzes (z.B. Resydrol WE 162 von Hoechst AG, 70%ig in Butylglykol/Methoxipropanol 3 : 1, SZ 40-60 mg KOH/g), 7,5 Teilen eines handelsüblichen Bisphenol-A-Epichlorhydrin-Epoxidharzes (Epoxy-Äquivalentgewicht von 450 - 500), 6,5 Teilen eines handelsüblichen Benzoguanaminharzes (83 %ig in Butanol, Veretherungsalkohol, wie z.B. Luwipal® B 017 der BASF AG), 4,2 Teilen eines handelsüblichen, geblockten Isocyanatvernetzers (z.B. Desmodur BL 3175 von Bayer AG), 2 Teilen eines handelsüblichen Polyethylenwachses als Slip-Additiv (z.B. PE-1500 von Langer & Co.) und 10 Teilen Butyldiglykolacetat komplettiert.

Die Applikation und Aushärtung des Überzugsmittels V2 sowie die Prüfung der resultierenden Beschichtung erfolgt analog Beispiel 1. Die Prüfergebnisse sind in Tabelle 1 dargestellt.

Tabelle 1: Prüfergebnisse

|  | 1 | V1 | 2 | 3 | V2 |
|---|---|---|---|---|---|
| 206-Spinneckbarkeit[1] | ++ | + | ++ | ++ | ++ |
| Bedruckbarkeit[2] | ++ | ++ | ++ | ++ | ++ |
| MEK[3] nach Coater | 40 | 10 | 40 | 20 | 40 |
| Decorater | 100 | 50 | 100 | 40 | 100 |
| IBO | >150 | >100 | >150 | >100 | 10 |
| Pasteurisationsbe- ständigkeit[4] | ++ | − | ++ | ++ | ++ |
| Vergilbungsbeständigkeit[5] | ++ | ++ | ++ | ++ | −− |
| Elastizität[6] | ++ | +− | ++ | ++ | + |
| Haftung[7] | Gt0 | Gt0 | Gt 0 | Gt 0 | Gt0 |
| Lagerstabilität der Dispersion 20°C) | > 6 Mon. | >6 Mon. | − | > 6 Mon. | − |

Erläuterungen zu Tabelle 1:

1)  Die 206-Spinneckbarkeit gibt an, ob die Beschich-
    tung nach der 2. Trocknung durch die mechanische
    Verformung im Metal-Box-Spin-Necker Diameter 206
    geschädigt wird (++ = keine Schädigung; -- = Ab-
    rieb).

2)  Die Bedruckbarkeit wurde visuell beurteilt. Geprüft
    wurde, ob die Druckfarbe einen geschlossenen, glän-

zenden Film ausbilden konnte (++ = beste Note; -- = schlechteste Note).

3) Beim MEK-Test wird ein mit Methylethylketon getränkter Wattebausch in regelmäßigen Doppelhüben über den Film bewegt, bis der Untergrund sichtbar ist. Die Auflagekraft ist ca. 20 N. Der MEK-Test wird direkt im Anschluß an die Weißlacktrocknung (Coater), die Druckfarbentrocknung (Decorater) und Innenlacktrocknung (IBO) durchgeführt.

4) Die Pasteurisationsbeständigkeit wird beurteilt, indem die beschichtete Dose 30 min. bei 85°C mit einer 0,1 %igen $Na_2CO_3$-Lösung pasteurisiert wird. Geprüft werden anschließend Tesafilmabriss und Wasseraufnahme (beste Note = ++; schlechteste Note = --).

5) Die Vergilbungsbeständigkeit wird beurteilt, indem die fertig eingebrannte Dose mit einer Dose, die nur einer Weißlacktrocknung unterzogen wurde, visuell verglichen wird (beste Note = ++; schlechteste Note = --).

6) Die Elastizität wird beurteilt, indem ein Erichsen Näpfchen (1. und 2. Zug) angefertigt wurde (beste Note = ++; schlechteste Note = --).

7) Die Haftung wurde beurteilt, indem eine Gitterschnittprüfung mit Tesafilmabriss durchgeführt wurde (beste Note = Gt 0; schlechteste Note = Gt 5).

Zusammenfassung der Prüfergebnisse

Der Vergleich der Beispiele 1, 2 und 3 sowie der Vergleichsbeispiele 1 und 2 zeigt, daß die Beschichtungsmassen der Beispiele 1 bis 3 hervorragende Beständigkeiten und sehr gute mechanische Eigenschaften, im speziellen eine ausgezeichnete Spinneckbarkeit auf verzinntem Stahlblech bei tiefgezogenen Dosen, besitzen. Ferner ist die Bedruckbarkeit mit den der bekannten Außenlacke vergleichbar. Die Pasteurisationsbeständigkeit sowohl der lösemittelhaltigen als auch der wäßrigen Beschichtungsmittel entspricht den hohen Anforderungen, wie sie bei konventionellen Emballagenlacken auf Lösemittelbasis verlangt werden.

**Patentansprüche**

1. Beschichtungsmasse, enthaltend eine Bindemittellösung (I), die

a) 30 bis 70 Gew.-% eines Bindemittels a mit einer Säurezahl von 20 bis 150 mg KOH/g,

b) 2 bis 30 Gew.-%, bevorzugt 5 bis 16 Gew.-%, mindestens eines Phenoplast- und/oder Aminoplastharzes und/oder eines Isocyanatvernetzers als Vernetzungsmittel b,

c) ggf. 1 bis 7 Gew.-%, ggf. bevorzugt 1 bis 5 Gew.-%, Ammoniak und/oder Amin als Neutralisationsmittel und

d) 5 bis 60 Gew.-% organische Lösungsmittel

enthält, wobei die Summe der Gewichtsanteile der Komponenten a bis d jeweils 100 Gew.-% beträgt und wobei das Bindemittel a hergestellt worden ist, indem

I. bei Temperaturen von 80 bis 200°C, vorzugsweise 120 bis 180°C, unter Verwendung von Katalysatoren

A) 20 bis 80 Gew.-% eines Epoxidharzes mit im Mittel mehr als einer Epoxidgruppe pro Molekül mit

B) 1 bis 60 Gew.-% eines carboxylgruppenhaltigen Polyesterharzes mit einem zahlenmittleren Molekulargewicht von 500 bis 5000

umgesetzt worden sind und

II. in Gegenwart des im ersten Verfahrensschritt erhaltenen Reaktionsproduktes

C) 10 bis 50 Gew.-% ethylenisch ungesättigte Monomere, wobei 10 bis 50 Gew.-% der Monomeren Carboxylgruppen enthalten,

bei Temperaturen von 60 bis 200°C, bevorzugt 120 bis 140°C, unter Verwendung von mindestens 2 Gew.%-, bezogen auf das Gewicht der ethylenisch ungesättigten Monomeren C, peroxidischer Initiatoren polymerisiert worden sind, wobei die Summe der Gewichtsanteile der Komponenten A bis C jeweils 100 Gew.-% beträgt,

dadurch gekennzeichnet, daß

1.) das Epoxidharz A ein zahlenmittleres Molekulargewicht von mindestens 850 aufweist,

2.) das Polyesterharz B eine Säurezahl von 2 bis <30 mg KOH/g aufweist und

3.) das Epoxidharz A mit dem Polyesterharz B so umgesetzt wird, daß mindestens 50 %, bevorzugt 50 bis <80 % der anfänglich vorhandenen Oxiranringe geöffnet werden.

2. Beschichtungsmasse nach Anspruch 1, dadurch gekennzeichnet, daß das Epoxidharz A auf Bisphenol A basiert.

3. Beschichtungsmasse nach Anspruch 1 oder 2, dadurch gekennzeichnet, daß das Epoxidharz ein zahlenmittleres Molekulargewicht von 1200 bis 3000 hat.

4. Beschichtungsmasse nach einem der Ansprüche 1 bis 3, dadurch gekennzeichnet, daß das Polyesterharz B ein zahlenmittleres Molekulargewicht von 1000 bis 3000 und eine Säurezahl von 10 bis 20 mg KOH/g aufweist.

5. Beschichtungsmasse nach einem der Ansprüche 1 bis 4, dadurch gekennzeichnet, daß die ethylenisch ungesättigten Monomeren bestehen aus

x) 10 bis 50 Gew.-%, bevorzugt 20 bis 40 Gew.-%, Carboxylgruppen enthaltenden Monomeren,

y) 0 bis 50 Gew.-%, bevorzugt 20 bis 40 Gew.-%, nicht funktionalisierten Monomeren und

z) 5 bis 60 Gew.-%, bevorzugt 10 bis 50 Gew.-%, (Meth)acrylsäureestern mit 1 bis 20 C-Atomen im Alkoholrest, welche ggf. zumindest teilweise hydroxifunktionell sind,

wobei die Summe der Gewichtsanteile der Komponenten x bis z jeweils 100 Gew.% beträgt.

6. Beschichtungsmasse nach einem der Ansprüche 1 bis 5, dadurch gekennzeichnet, daß das Bindemittel a erhältlich ist aus

A) 20 bis 60 Gew.-% Epoxidharz A,

B) 10 bis 40 Gew.-% Polyesterharz B und

C) 15 bis 40 Gew.-% Monomeren C,

wobei die Summe der Gewichtsanteile der Komponenten A bis C jeweils 100 Gew.-% beträgt.

7. Verfahren zur Herstellung von Beschichtungsmassen, enthaltend eine Bindemittellösung (I), die

a) 30 bis 70 Gew.-% eines Bindemittels a mit einer Säurezahl von 20 bis 150 mg KOH/g,

b) 2 bis 30 Gew.-%, bevorzugt 5 bis 16 Gew.-%, mindestens eines Phenoplast- und/oder Aminoplastharzes und/oder eines Isocyanatvernetzers als Vernetzungsmittel b,

c) ggf. 1 bis 7 Gew.-%, ggf. bevorzugt 1 bis 5 Gew.-%, Ammoniak und/oder Amin als Neutralisationsmittel und

d) 5 bis 60 Gew.-% organische Lösungsmittel enthält, wobei die Summe der Gewichtsanteile der Komponenten a bis d jeweils 100 Gew.-% beträgt, bei dem

1.) bei Temperaturen von 80 bis 200°C, vorzugsweise 120 bis 180°C unter Verwendung von Katalysatoren

A) 20 bis 80 Gew.-% eines Epoxidharzes mit im Mittel mehr als einer Epoxidgruppe pro Molekül mit

B) 1 bis 60 Gew.-% eines carboxylgruppenhaltigen Polyesterharzes mit einem zahlenmittleren Molekulargewicht von 500 bis 5000

umgesetzt werden,

2.) in Gegenwart des im ersten Verfahrensschritt erhaltenen Reaktionsproduktes

C) 10 bis 50 Gew.-% ethylenisch ungesättigte Monomere, wobei 10 bis 50 Gew.-% der Monomeren Carboxylgruppen enthalten,

bei Temperaturen von 60 bis 200°C, bevorzugt 120 bis 140°C, unter Verwendung von mindestens 2 Gew.-%, bezogen auf das Gewicht der ethylenisch ungesättigten Monomeren C, peroxidischer Initiatoren polymerisiert werden, wobei die Summe der Gewichtsanteile der Komponenten A bis C jeweils 100 Gew.-% beträgt,

3.) das erhaltene Bindemittel a ggf. mit der Komponente c zumindest teilweise neutralisiert wird,

4.) Vernetzungsmittel b, organische Lösungsmittel d sowie ggf. weitere übliche Zusatzstoffe zugemischt werden und

5.) die Beschichtungsmasse ggf. in Wasser dispergiert wird,

dadurch gekennzeichnet, daß

1.) das Epoxidharz A ein zahlenmittleres Molekulargewicht von mindestens 850 aufweist,

2.) das Polyesterharz B eine Säurezahl von 2 bis <30 mg KOH/g aufweist und

3.) das Epoxidharz A mit dem Polyesterharz B so umgesetzt wird, daß mindestens 50 %, bevorzugt 50 bis <80 % der anfänglich vorhandenen Oxiranringe geöffnet werden.

8. Verfahren nach Anspruch 7, dadurch gekennzeichnet, daß das erhaltene Bindemittel a zunächst mit dem Vernetzungsmittel b präkondensiert wird, dann ggf. mit der Komponente c zumindest teilweise neutralisiert wird, Lösungsmittel d sowie ggf. weitere übliche Zusatzstoffe zugemischt werden und die Beschichtungsmasse ggf. in Wasser dispergiert wird.

9. Verfahren nach Anspruch 7 oder 8, dadurch gekennzeichnet, daß nach der radikalischen Polymerisation weniger als 0,4 Gew.-%, bezogen auf die Summe von a bis d, Restmonomere vorhanden sind.

10. Verfahren nach einem der Ansprüche 7 bis 9, dadurch gekennzeichnet, daß die Komponente d bereits als Lösungsmittel der als erster Verfahrensschritt erfolgenden Veresterung der Komponenten A und B eingesetzt wird.

11. Verfahren nach einem der Ansprüche 7 bis 10, dadurch gekennzeichnet, daß das Epoxidharz A auf Bisphenol A basiert.

12. Verfahren nach einem der Ansprüche 7 bis 11, dadurch gekennzeichnet, daß das Epoxidharz ein zahlenmittleres Molekulargewicht von 1200 bis 3000 hat.

13. Verfahren nach einem der Ansprüche 7 bis 12, dadurch gekennzeichnet, daß das Polyesterharz B ein zahlenmittleres Molekulargewicht von 1000 bis 3000 und eine Säurezahl von 10 bis 20 mg KOH/g aufweist.

14. Verfahren nach einem der Ansprüche 7 bis 13, dadurch gekennzeichnet, daß die ethylenisch ungesättigten Monomeren C bestehen aus

x) 10 bis 50 Gew.-%, bevorzugt 20 bis 40 Gew.-%, Carboxylgruppen enthaltenden Monomeren,

y) 0 bis 50 Gew.-%, bevorzugt 20 bis 40 Gew.-%, nicht funktionalisierten Monomeren und

z) 5 bis 60 Gew.-%, bevorzugt 10 bis 50 Gew.-%, (Meth)acrylsäureestern mit 1 bis 20 Kohlenstoffatomen im Alkoholrest, welche ggf. hydroxifuntionell sind,

wobei die Summe der Gewichtsanteile der Komponenten x bis z jeweils 100 Gew.-% beträgt.

**15.** Verwendung der Beschichtungsmassen nach einem der Ansprüche 1 bis 6 zur Beschichtung von Emballagen.

**16.** Verwendung der Beschichtungsmassen nach einem der Ansprüche 1 bis 6 zur Außenbeschichtung von Dosen.

**17.** Verwendung der Beschichtungsmassen nach einem der Ansprüche 1 bis 6 zur Beschichtung von verzinnten Dosen.

**18.** Verwendung nach Anspruch 16 oder 17, dadurch gekennzeichnet, daß die Dosen abgestreckt - tiefgezogene zweiteilige Getränkedosen oder abgestreckt tiefgezogene oder anderweitig tiefgezogene Konservendosen sind.

**Claims**

**1.** Coating compound which comprises a binder solution (I) containing

a) 30 to 70% by weight of a binder a having an acid value of 20 to 150 mg of KOH/g,

b) 2 to 30% by weight, preferably 5 to 16% by weight, of at least one phenolic and/or amino resin and/or an isocyanate crosslinking agent as crosslinking agent b,

c) if appropriate 1 to 7% by weight, if appropriate preferably 1 to 5% by weight, of ammonia and/or an amine as neutralization agent and

d) 5 to 60% by weight of organic solvent,

the total weights of the components a to d being in each case 100% by weight and the binder a being prepared by

I. reacting

A) 20 to 80% by weight of an epoxy resin having on average more than one epoxide group per molecule with

B) 1 to 60% by weight of a carboxyl-containing polyester resin having a number average molecular weight of 500 to 5,000

at temperatures of 80 to 200°C, preferably of 120 to 180°C, and in the presence of catalysts, and by

II. polymerizing

C) 10 to 50% by weight of ethylenically unsaturated monomers, 10 to 50% by weight of the monomers containing carboxyl groups,

in the presence of the reaction product obtained in the first process stage,

at temperatures of 60 to 200°C, preferably of 120 to 140°C, in the presence of at least 2% by weight, based on the weight of the ethylenically unsaturated monomers C, of peroxidic initiators, the total weights of the components A to C being in each case 100% by weight,

characterized in that

1) the epoxy resin A has a number average molecular weight of at least 850,

2) the polyester resin B has an acid value of 2 to <30 mg of KOH/g and

3) the epoxy resin A is reacted with the polyester resin B in such a way that at least 50%, preferably 50 to <80% of the oxirane rings initially present are opened.

**2.** Coating compound according to Claim 1, characterized in that the epoxy resin A is based on bisphenol A.

**3.** Coating compound according to Claim 1 or 2, characterized in that the epoxy resin has a number average molecular weight of 1,200 to 3,000.

**4.** Coating compound according to one of Claims 1 to 3, characterized in that the polyester resin B has a number average molecular weight of 1,000 to 3,000 and an acid value of 10 to 20 mg of KOH/g.

**5.** Coating compound according to one of Claims 1 to 4, characterized in that the ethylenically unsaturated monomers consist of

x) 10 to 50% by weight, preferably 20 to 40% by weight, of carboxyl-containing monomers,

14

y) 0 to 50% by weight, preferably 20 to 40% by weight, of non-functionalized monomers and

z) 5 to 60% by weight, preferably 10 to 50% by weight, of (meth)acrylic acid esters having 1 to 20 carbon atoms in the alcohol radical, which are, if appropriate, at least in part hydroxy-functional,

the total weights of the components x to z being in each case 100% by weight.

6. Coating compound according to one of Claims 1 to 5, characterized in that the binder a can be obtained from

A) 20 to 60% by weight of the epoxy resin A,

B) 10 to 40% by weight of the polyester resin B and

C) 15 to 40% by weight of the monomers C, the total weights of the components A to C being in each case 100% by weight.

7. Process for the production of coating compounds which comprise a binder solution (I) containing

a) 30 to 70% by weight of a binder a having an acid value of 20 to 150 mg of KOH/g,

b) 2 to 30% by weight, preferably 5 to 16% by weight, of at least one phenolic and/or amino resin and/or an isocyanate crosslinking agent as crosslinking agent b,

c) if appropriate 1 to 7% by weight, if appropriate preferably 1 to 5% by weight, of ammonia and/or an amine as neutralization agent and

d) 5 to 60% by weight of organic solvent, the total weights of the components a to d being in each case 100% by weight, in which

1)

A) 20 to 80% by weight of an epoxy resin having on average more than one epoxide group per molecule and

B) 1 to 60% by weight of a carboxyl-containing polyester resin having a number average molecular weight of 500 to 5,000 are reacted at temperatures of 80 to 200°C, preferably of 120 to 180°C, and in the presence of catalysts,

2)

C) 10 to 50% by weight of ethylenically unsaturated monomers, 10 to 50% by weight of the monomers containing carboxyl groups,

are polymerized in the presence of the reaction product obtained in the first process stage, at temperatures of 60 to 200°C, preferably of 120 to 140°C, in the presence of at least 2% by weight, based on the weight of the ethylenically unsaturated monomers C, of peroxidic initiators, the total weights of the components A to C being in each case 100% by weight,

3) if appropriate, the resultant binder a is at least partially neutralized with the component c,

4) the crosslinking agent b, organic solvent d and, if appropriate, other customary additives are admixed and

5) the coating compound, if appropriate, is dispersed in water,

characterized in that

1) the epoxy resin A has a number average molecular weight of at least 850,

2) the polyester resin B has an acid value of 2 to <30 mg of KOH/g and

3) the epoxy resin A is reacted with the polyester resin B in such a way that at least 50%, preferably 50 to <80% of the oxirane rings initially present are opened.

8. Process according to Claim 7, characterized in that the resultant binder a is, first precondensed with the crosslinking agent b, is then at least partially neutralized, if appropriate, with the component c, the solvent d and, if appropriate, other customary additives are admixed and, if appropriate, the coating compound is dispersed in water.

9. Process according to Claim 7 or 8, characterized in that less than 0.4% by weight, based on the total of a to d, of residual monomers is present after the free-radical polymerization.

10. Process according to one of Claims 7 to 9, characterized in that the component d is used as solvent of the etherification of the components A and B carried out as the first process stage.

11. Process according to one of Claims 7 to 10, characterized in that the epoxy resin A is based on bisphenol A.

**12.** Process according to one of Claims 7 to 11, characterized in that the epoxy resin has a number average molecular weight of 1,200 to 3,000.

**13.** Process according to one of Claims 7 to 12, characterized in that the polyester resin B has a number average molecular weight of 1,000 to 3,000 and an acid value of 10 to 20 mg of KOH/g.

**14.** Process according to one of Claims 7 to 13, characterized in that the ethylenically unsaturated monomers C consist of
x) 10 to 50% by weight, preferably 20 to 40% by weight, of carboxyl-containing monomers,
y) 0 to 50% by weight, preferably 20 to 40% by weight, of non-functionalized monomers and
z) 5 to 60% by weight, preferably 10 to 50% by weight, of (meth)acrylic acid esters having 1 to 20 carbon atoms in the alcohol radical, which are, if appropriate, hydroxy-functional,
the total weights of the components x to z being in each case 100% by weight.

**15.** Use of the coating compounds according to one of Claims 1 to 6 for coating packaging containers.

**16.** Use of the coating compounds according to one of Claims 1 to 6 for exterior coating of cans.

**17.** Use of the coating compounds according to one of Claims 1 to 6 for coating of tin-plated cans.

**18.** Use according to Claim 16 or 17, characterized in that the cans are drawn and ironed two-part beverage cans or drawn and ironed or otherwise deep-drawn foodstuff cans.

**Revendications**

**1.** Masse de revêtement, contenant une solution de liant (I), qui contient
a) de 30 à 70 % en poids d'un liant a ayant un indice d'acidité de 20 à 150 mg de KOH/g,
b) de 2 à 30 % en poids, de préférence de 5 à 16 % en poids, au moins d'une résine de phénoplaste et/ou d'une résine d'aminoplaste et/ou d'un agent de réticulation d'isocyanate en tant qu'agent de réticulation b,
c) le cas échéant, de 1 à 7 % en poids, le cas échéant de préférence de 1 à 5 % en poids, d'ammoniaque et/ou d'amine en tant qu'agent de neutralisation et
d) de 5 à 60 % en poids de solvants organiques,
la somme des proportions en poids des composants a à d étant à chaque fois de 100 % en poids et le liant a étant préparé en ce que l'on a fait réagir
I. à des températures de 80 à 200°C, de préférence de 120 à 180°C, sous utilisation de catalyseurs
A) de 20 à 80 % en poids d'une résine époxyde ayant en moyenne plus d'un groupement époxyde par molécule avec
B) de 1 à 60 % en poids d'une résine de polyester contenant des groupements carboxyles ayant un poids moléculaire moyen au nombre de 500 à 5 000 et
II. en ce que, en présence du produit de réaction obtenu dans la première étape du procédé, l'on a fait polymérisé
C) de 10 à 50 % en poids de monomères éthyléniquement insaturés, de 10 à 50 % en poids des monomères contenant des groupements carboxyles,
à des températures de 60 à 200°C, de préférence de 120 à 140°C, sous utilisation d'au moins 2 % en poids, par rapport au poids des monomères éthyléniquement insaturés C, d'agents d'initiation peroxydés, la somme des proportions en poids des, composants A à C étant à chaque fois de 100 % en poids,
caractérisée en ce que
1.) la résine époxyde A présente un poids moléculaire moyen au nombre d'au moins 850,
2.) la résine de polyester B présente un indice d'acidité de 2 à <30 mg de KOH/g et
3.) en ce que l'on fait réagir la résine époxyde A avec la résine de polyester B de telle manière que l'on ouvre au moins 50 %, de préférence de 50 à <80 % des anneaux oxirannes présents initialement.

**2.** Masse de revêtement selon la revendication 1, caractérisée en ce que la résine époxyde A est basée sur le bisphénol A.

16

3. Masse de revêtement selon la revendication 1 ou 2, caractérisée en ce que la résine époxyde a un poids moléculaire moyen au nombre de 1 200 à 3 000.

4. Masse de revêtement selon l'une quelconque des revendications 1 à 3, caractérisée en ce que la résine de polyester B présente un poids moléculaire moyen au nombre de 1 000 à 3 000 et un indice d'acidité de 10 à 20 mg de KOH/g.

5. Masse de revêtement selon l'une quelconque des revendications 1 à 4, caractérisée en ce que les monomères éthyléniquement insaturés se composent

x) de 10 à 50 % en poids, de préférence de 20 à 40 % en poids de monomères contenant des groupements carboxyles,

y) de 0 à 50 % en poids, de préférence de 20 à 40 % en poids de monomères non fonctionnalisés et

z) de 5 à 60 % en poids, de préférence de 10 à 50 % en poids d'esters d'acide (méth)acrylique ayant de 1 à 20 atomes de C dans le résidu alcool, qui sont le cas échéant au moins partiellement hydroxyfonctionnels,

la somme des proportions en poids des composants x à z étant à chaque fois de 100 % en poids.

6. Masse de revêtement selon l'une quelconque des revendications 1 à 5, caractérisée en ce que l'on peut obtenir le liant a à partir

A) de 20 à 60 % en poids de résine époxyde A,

B) de 10 à 40 % en poids de résine de polyester B et

C) de 15 à 40 % en poids de monomères C,

la somme des proportions en poids des composants A à C étant à chaque fois de 100 % en poids.

7. Procédé de préparation de masses de revêtement contenant une solution de liant (I), qui contient

a) de 30 à 70 % en poids d'un liant a ayant un indice d'acidité de 20 à 150 mg de KOH/g,

b) de 2 à 30 % en poids, de préférence de 5 à 16 % en poids, au moins d'une résine de phénoplaste et/ou d'une résine d'aminoplaste et/ou d'un agent de réticulation d'isocyanate en tant qu'agent de réticulation b,

c) le cas échéant, de 1 à 7 % en poids, le cas échéant de préférence de 1 à 5 % en poids, d'ammoniaque et/ou d'amine en tant qu'agent de neutralisation et

d) de 5 à 60 % en poids de solvants organiques,

la somme des proportions en poids des composants a à d étant à chaque fois de 100 % en poids, lors duquel on fait réagir

1.) à des températures de 80 à 200°C, de préférence de 120 à 180°C, sous utilisation de catalyseurs

A) de 20 à 80 % en poids d'une résine époxyde ayant en moyenne plus d'un groupement époxyde par molécule avec

B) de 1 à 60 % en poids d'une résine de polyester contenant des groupements carboxyles ayant un poids moléculaire moyen au nombre de 500 à 5 000,

2.) en ce que, en présence du produit de réaction obtenu dans la première étape du procédé, l'on polymérise

C) de 10 à 50 % en poids de monomères éthyléniquement insaturés, de 10 à 50 % en poids des monomères contenant des groupements carboxyles,

à des températures de 60 à 200°C, de préférence de 120 à 140°C, sous utilisation d'au moins 2 % en poids, par rapport au poids des monomères éthyléniquement insaturés C, d'agents d'initiation peroxydés, la somme des proportions en poids des composants A à C étant à chaque fois de 100 % en poids,

3.) en ce que l'on neutralise au moins partiellement le liant a obtenu, le cas échéant, avec le composant c,

4.) en ce que l'on y mélange de l'agent de réticulation b, du solvant organique d ainsi que, le cas échéant, des additifs usuels supplémentaires et,

5.) en ce que la masse de revêtement est, le cas échéant, mise en dispersion dans l'eau,

caractérisé en ce que

1.) la résine époxyde A présente un poids moléculaire moyen au nombre d'au moins 850,

2.) la résine de polyester B présente un indice d'acidité de 2 à <30 mg de KOH/g et

3.) en ce que l'on fait réagir la résine époxyde A avec la résine de polyester B de telle manière que l'on ouvre au moins 50 %, de préférence de 50 à <80 % des anneaux oxirannes présents initialement.

8. Procédé selon la revendication 7, caractérisé en ce que le liant obtenu a est tout d'abord précondensé avec l'agent de réticulation b, puis qu'il est, le cas échéant, au moins partiellement neutralisé avec le composant c, que l'on y mélange du solvant d ainsi que, le cas échéant, des additifs usuels supplémentaires et que la masse de revêtement est, le cas échéant, mise en dispersion dans l'eau.

9. Procédé selon la revendication 7 ou 8, caractérisé en ce que sont présents, après la polymérisation radicalaire, moins de 0,4 % en poids, par rapport à la somme de a à d, de monomères restants.

10. Procédé selon l'une quelconque des revendications 7 à 9, caractérisé en ce que l'on utilise le composant d déjà en tant que solvant de l'estérification des composants A et B, qui suit en tant que première étape de procédé.

11. Procédé selon l'une quelconque des revendications 7 à 10, caractérisé en ce que la résine époxyde A est basée sur le bisphénol A.

12. Procédé selon l'une quelconque des revendications 7 à 11, caractérisé en ce que la résine époxyde a un poids moléculaire moyen au nombre de 1 200 à 3 000.

13. Procédé selon l'une quelconque des revendications 7 à 12, caractérisé en ce que la résine de polyester B présente un poids moléculaire moyen au nombre de 1 000 à 3 000 et un indice d'acidité de 10 à 20 mg de KOH/g.

14. Procédé selon l'une quelconque des revendications 7 à 13, caractérisé en ce que les monomères éthyléniquement insaturés C se composent

x) de 10 à 50 % en poids, de préférence de 20 à 40 % en poids de monomères contenant des groupements carboxyles,

y) de 0 à 50 % en poids, de préférence de 20 à 40 % en poids de monomères non fonctionnalisés et

z) de 5 à 60 % en poids, de préférence de 10 à 50 % en poids d'esters d'acide (méth)acrylique ayant de 1 à 20 atomes de C dans le résidu alcool, qui sont le cas échéant hydroxyfonctionnels,

la somme des proportions en poids des composants x à z étant à chaque fois de 100 % en poids.

15. Utilisation des masses de revêtement selon l'une quelconque des revendications 1 à 6 pour le revêtement d'emballages.

16. Utilisation des masses de revêtement selon l'une quelconque des revendications 1 à 6 pour le revêtement externe de boîtes.

17. Utilisation des masses de revêtement selon l'une quelconque des revendications 1 à 6 pour le revêtement de doses étainées.

18. Utilisation selon la revendication 16 ou 17, caractérisée en ce que les boîtes sont des boîtes pour boissons embouties-étirées à deux parties ou des boîtes de conserve embouties-étirées ou embouties d'une autre manière.